# FASCICULE DE BREVET EUROPEEN

(11) **EP 4 288 639 B1**
(45) Date de publication et mention de la délivrance du brevet: **23.10.2024**
(21) Numéro de dépôt: 22706649.5
(22) Date de dépôt: 02.02.2022
(51) Int. Cl.: F01D 17/16, F01D 25/24, F04D 19/02, F04D 29/52, F04D 29/54, F04D 29/56, F04D 29/64

(54) **ANNEAU INTERNE DE SUPPORT D'AUBES D'UN REDRESSEUR DE COMPRESSEUR D'UNE TURBOMACHINE**
INNERER SCHAUFELSTÜTZRING EINES TURBOMASCHINENVERDICHTERGLEICHRICHTERS
INNER BLADE SUPPORT RING OF A TURBOMACHINE COMPRESSOR RECTIFIER

(30) Priorité: 05.02.2021 FR 2101113
(43) Date de publication de la demande: 13.12.2023
(73) Titulaire: SAFRAN AIRCRAFT ENGINES, 75015 Paris (FR)
(72) Inventeur: CORNEC, Nicolas Gérard Bénito, 77550 Moissy-Cramayel (FR)
(74) Mandataire: Regimbeau
(86) Numéro de dépôt international: PCT/FR2022/050202
(87) Numéro de publication internationale: WO 2022/167755

(56) Documents cités:
- CN-A- 112 065 777
- FR-A1- 3 049 003
- JP-A- 2004 176 548

## Description

### DOMAINE DE L'INVENTION

L'invention se situe dans le domaine des compresseurs axiaux d'une turbomachine, notamment une turbomachine d'aéronef.

La présente invention concerne plus précisément un anneau interne de support des aubes à calage variable d'un redresseur de compresseur axial d'une turbomachine. L'invention concerne également le redresseur muni d'un tel anneau interne de support, le compresseur axial de turbomachine comprenant au moins un tel redresseur et enfin, la turbomachine équipée d'un tel compresseur.

Ce compresseur est de préférence un compresseur haute pression.

### ETAT DE LA TECHNIQUE

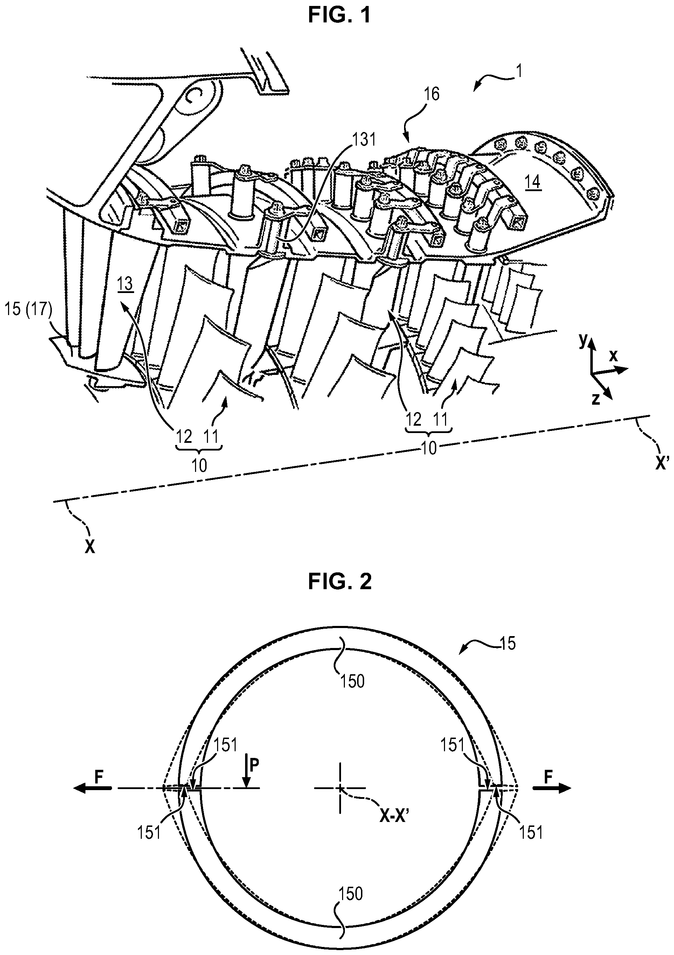

La figure 1 jointe représente un exemple possible de réalisation d'un compresseur axial de turbomachine.

Ce compresseur 1 s'étend selon un axe longitudinal X-X'. Il comprend plusieurs étages axiaux 10, disposés en série, chaque étage comprenant un rotor 11 et un stator à aubes ou redresseur 12.

On définit en chaque point du redresseur 12 :
- une direction axiale x, parallèle à l'axe longitudinal du compresseur X-X',
- une direction radiale y, qui s'étend selon un rayon du compresseur perpendiculairement à la direction axiale x, et
- une direction circonférentielle z, perpendiculaire à la direction axiale x et à la direction radiale y.

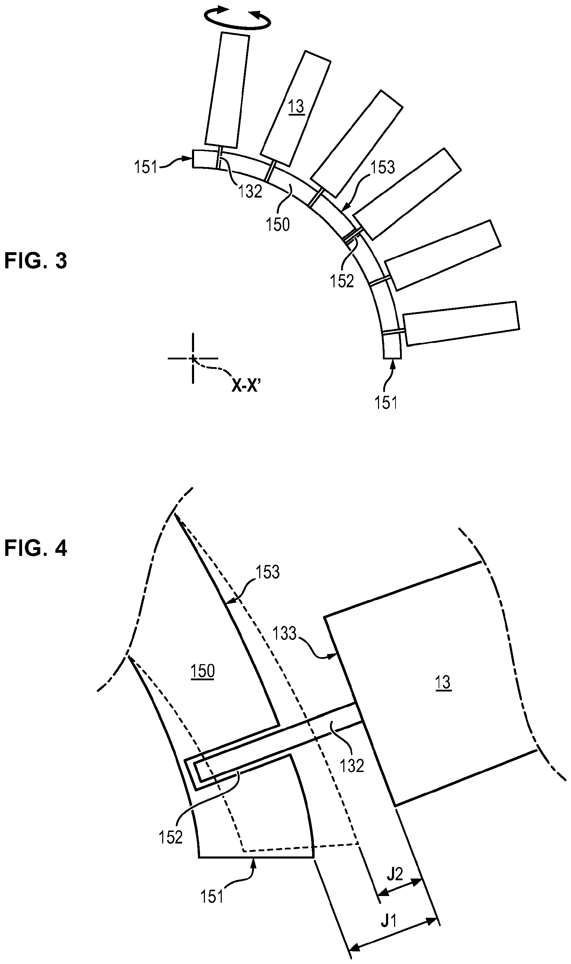

Chaque redresseur 12 comprend une pluralité d'aubes 13, qui s'étendent radialement ou sensiblement radialement entre un carter externe 14 et un anneau interne 15. Ces aubes 13 sont à calage variable, c'est-à-dire qu'elles peuvent pivoter autour de leurs axes de pivotement pour occuper différents angles et optimiser l'écoulement des gaz à l'intérieur du redresseur. Chaque aube 13 comprend ainsi un axe radialement externe de pivotement 131, logé dans le carter externe 14 et un axe radialement interne de pivotement 132, (voir la figure 3 jointe), logé dans l'anneau interne 15. Un dispositif d'asservissement 16 (par exemple à couronne rotative et biellettes) permet de faire pivoter les aubes.

L'anneau interne 15 est composé de plusieurs secteurs d'anneau 150, (le plus souvent de deux secteurs d'anneau de 180° comme représenté sur la figure 2 jointe), qui sont assemblés circonférentiellement bout à bout (selon la direction z), par une cartouche, de façon à former ainsi, une fois réunis, un anneau complet sur 360°. Le fait d'avoir préférentiellement deux secteurs d'anneau de 180° est dû à une contrainte d'assemblage du compresseur qui est composé de deux demi-coquilles.

Comme on peut le voir sur la figure 3 jointe, chaque secteur d'anneau 150 présente à ses deux extrémités opposées, une face de contact 151, de préférence plane. Sur la figure 2, on peut voir que lorsque les deux secteurs d'anneau 150 sont assemblés bout-à-bout, leurs faces de contact 151 respectives se touchent et qu'il existe un plan de joint P entre ces deux secteurs, plus précisément entre leurs deux faces de contact 151.

Sur la figure 2, l'anneau interne 15 représenté en traits pleins correspond à la position normale de cet anneau, c'est-à-dire sa position à froid lorsque le compresseur n'est pas utilisé.

Toutefois, on a constaté que les anneaux interne 15 présentaient souvent des distorsions liées à leur environnement mécanique et/ou thermique lors du fonctionnement du compresseur. On a ainsi pu observer une déformation des secteurs d'anneau 150, au niveau du plan de joint P de ces secteurs, due à la dilatation thermique. La position dilatée des secteurs 150 est représentée en traits pointillés sur la figure 2, (direction de la déformation représentée par les flèches F).

Comme on peut le voir sur la figure 3 et sur la figure 4 jointe, chaque secteur d'anneau 150 présente une pluralité de logements 152 qui débouchent sur sa face radialement externe 153 et qui permettent de recevoir chacun un axe radialement interne de pivotement 132 d'une aube pivotante 13. À des fins de simplification, un seul logement 152 a été représenté de façon schématique sur la figure 3.

Comme cela apparaît mieux sur la figure 4, dans la mesure où un secteur d'anneau 150 supporte des aubes 13 pivotantes, il existe un jeu de fonctionnement initial J1 entre la base 133 de chaque aube 13 et la face externe 153 du secteur d'anneau 150. La distorsion et l'ouverture des secteurs d'anneau 150 (position déformée de l'anneau 150 représentée en pointillés) conduit toutefois à une réduction importante de ce jeu de fonctionnement. Le jeu réduit entre la base 133 de chaque aube 13 et la face radialement externe 153 du secteur d'anneau 150 est référencé J2. Ce jeu réduit J2 peut entraîner des contacts entre la base de l'aube 13 et le secteur d'anneau 150 et conduire jusqu'à un blocage de l'aube 13.

Un tel blocage peut entraîner des effets dommageables sur le compresseur, car un écart d'incidence des différentes aubes 13 peut conduire à un phénomène de pompage de ce compresseur, c'est-à-dire à un décrochage aérodynamique des aubes 13 conduisant à une inversion énergétique du flux d'air à l'intérieur du compresseur 1.

Actuellement, la résolution de ce problème s'effectue en augmentant le jeu initial J1 pour éviter le contact entre la base 133 de l'aube 13 et le secteur d'anneau 150 malgré la déformation du secteur d'anneau liée à la dilatation thermique. Toutefois, cette solution n'est pas satisfaisante.

Des documents d'art antérieur pertinents sont JP 2004 176548 A, FR 3 049 003 A1 et spécifiquement CN 112 065 777 A. Comme l'invention, ce dernier document divulgue un anneau interne de support des aubes à calage variable d'un redresseur de compresseur axial d'une turbomachine. Cet anneau diffère de la présente invention en ce que: à un coté, la connexion pion-cavité est configurée et dimensionnée comme un ajustement par frottement et à l'autre coté, la cavité est configurée et dimensionnée pour recevoir ledit pion d'assemblage avec un jeu de montage autorisant un montage par ajustement glissant.

### EXPOSE DE L'INVENTION

L'invention a pour but de proposer un anneau interne de support des aubes à calage variable d'un redresseur de compresseur axial d'une turbomachine, qui comprenne au moins deux secteurs d'anneau, qui soient à la fois inséparables à chaud pendant l'utilisation du compresseur, (pour éviter le problème précité) et susceptibles d'être assemblés ou désassemblés à froid, lorsque le compresseur n'est pas utilisé, par exemple pour des opérations de maintenance.

A cet effet, l'invention concerne un anneau interne de support des aubes à calage variable d'un redresseur de compresseur axial d'une turbomachine, comprenant au moins deux secteurs d'anneau, assemblés circonférentiellement bout à bout de façon à former ledit anneau interne, chaque secteur d'anneau comprenant une pluralité de logements de réception d'un axe radialement interne de pivotement de l'une desdites aubes. Conformément à l'invention, au niveau de chaque plan de jonction entre les extrémités de deux secteurs d'anneau successifs, l'assemblage s'effectue par coopération d'un pion d'assemblage et d'une cavité de réception de ce pion d'assemblage, ledit pion d'assemblage étant fixé sur l'extrémité de l'un desdits deux secteurs d'anneau successifs et ladite cavité étant ménagée à l'extrémité de l'autres desdits deux secteurs d'anneau successifs, la cavité étant configurée et dimensionnée pour recevoir ledit pion d'assemblage avec un jeu de montage autorisant un montage par ajustement glissant et ledit pion d'assemblage est réalisé dans un matériau présentant un coefficient de dilatation thermique supérieur à celui du matériau constituant lesdits secteurs d'anneau successifs de sorte que lors de l'élévation de température résultant de l'utilisation dudit compresseur axial, le pion d'assemblage se dilate davantage à l'intérieur de ladite cavité que la cavité elle-même, en assurant ainsi l'assemblage inséparable des deux secteurs d'anneau successifs et que lors de la diminution de température résultant de la cessation de l'utilisation dudit compresseur axial, le pion d'assemblage (174) se rétracte à l'intérieur de ladite cavité (175), en autorisant le démontage desdits deux secteurs d'anneau successifs.

Grâce à ces caractéristiques de l'invention, l'assemblage des deux secteurs d'anneau est donc réversible.

Cette solution technique est en outre simple à mettre en oeuvre et peu coûteuse.

Enfin, l'invention permet de limiter l'usure des aubes et de réduire les coûts de maintenance et de remplacement des pièces.

Selon d'autres caractéristiques avantageuses et non limitatives de l'invention, prises seules ou en combinaison :
- chaque secteur d'anneau présente à l'une de ses deux extrémités, une cavité de réception d'un pion d'assemblage et en ce qu'un pion d'assemblage est fixé à l'autre de ses deux extrémités ;
- au moins l'un des secteurs d'anneau présente à chacune de ses deux extrémités, une cavité de réception et en ce qu'au moins un autre des secteurs d'anneau présente à chacune de ses deux extrémités, un pion d'assemblage ;
- l'anneau comprend deux secteurs d'anneau assemblés bout-à-bout pour former ledit anneau interne ;
- le ratio entre le coefficient de dilatation thermique du matériau constituant le pion d'assemblage et le coefficient de dilatation thermique du matériau constituant lesdits secteurs d'anneau est supérieur ou égal à 1,3 et inférieur à 2 ;
- le ratio entre le coefficient de dilatation thermique du matériau constituant le pion d'assemblage et le coefficient de dilatation thermique du matériau constituant lesdits secteurs d'anneau est supérieur ou égal à 2 ;
- le matériau constituant le pion d'assemblage est choisi parmi l'aluminium ou un acier à base de nickel et le matériau constituant lesdits secteurs d'anneau est choisi parmi l'acier ou le titane ;
- ledit pion d'assemblage est cylindrique et ladite cavité de réception de ce pion d'assemblage est de forme cylindrique.

L'invention concerne également un redresseur de compresseur axial de turbomachine comprenant une pluralité d'aubes à calage variable, montées pivotantes entre un carter externe de support desdites aubes et un anneau interne de support des dites aubes, cet anneau interne étant tel que précité.

L'invention concerne aussi un compresseur axial de turbomachines comprenant au moins un redresseur tel que précité.

L'invention concerne enfin une turbomachine équipée d'un compresseur axial tel que précité.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente une vue en perspective d'un compresseur de turbomachine.
- la figure 2 est une vue schématique d'un anneau interne de support des aubes d'un redresseur selon l'état de la technique.
- la figure 3 est une vue schématique d'un secteur d'anneau selon l'état de la technique.
- la figure 4 est une vue schématique et de détail de l'extrémité d'un secteur d'anneau selon l'état la technique.
- la figure 5 est une vue de face d'un anneau interne de support des aubes à calage variable d'un redresseur de compresseur axial d'une turbomachine conforme à l'invention.
- la figure 6 est une vue de détail d'une partie de l'anneau interne conforme à l'invention.

### DESCRIPTION DETAILLEE DE L'INVENTION

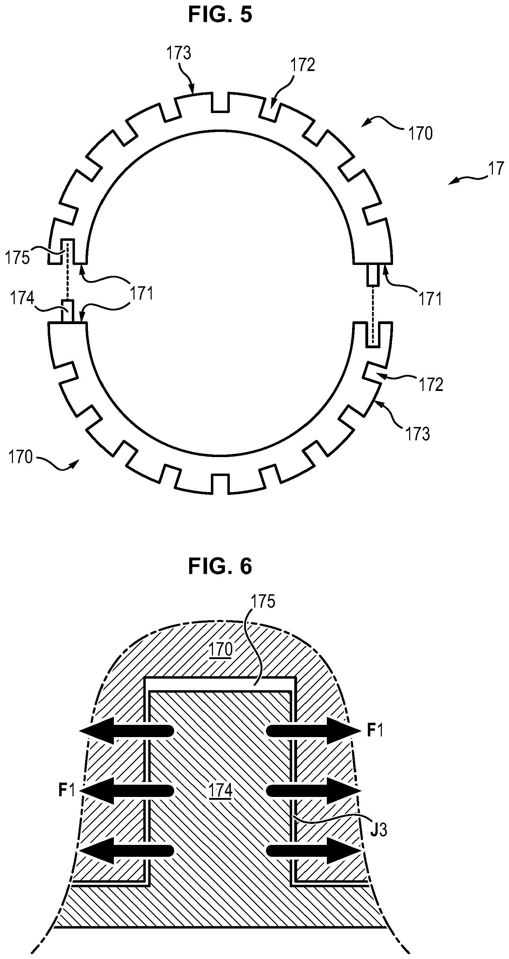

L'anneau interne de support des aubes à calage variable d'un redresseur de compresseur axial d'une turbomachine, conforme à l'invention, va maintenant être décrit en liaison avec la figure 5. Cet anneau porte la référence générale 17.

Tout comme l'anneau interne 15 précédemment décrit, l'anneau interne 17 comprend au moins deux secteurs d'anneau 170, assemblés circonférentiellement bout-à-bout de façon à former ledit anneau complet qui s'étend sur 360°. De préférence, l'anneau interne 17 comprend uniquement deux secteurs d'anneau 170 s'étendant sur un angle de 180° chacun. Toutefois, cet anneau interne 17 pourraient également comprendre un plus grand nombre de tels secteurs.

Chaque secteur d'anneau 170 comprend deux extrémités 171, qui constituent des surfaces de contact avec les extrémités 171 d'un secteur d'anneau 170 voisin. Lorsque deux secteurs d'anneau successifs sont assemblés, il existe donc un plan de jonction entre leurs extrémités 171 en contact. Les extrémités 171 sont de préférence planes.

En outre, chaque secteur d'anneau 170 comprend une pluralité de logements 172 de réception de l'axe radialement interne de pivotement 132 d'une aube pivotante 13, telle que décrite précédemment. Ces logements 172 débouchent sur la face radialement externe 173 de chaque secteur d'anneau 170.

Au niveau du plan de jonction (plan de contact) entre les extrémités respectives 171 de deux secteurs d'anneau successifs, l'assemblage s'effectue par coopération d'un pion d'assemblage 174 avec une cavité de réception 175 de ce pion.

Plus précisément, le pion d'assemblage 174 est fixé à l'extrémité 171 de l'un des deux secteurs d'anneau successifs et la cavité de réception 175 est ménagée à l'extrémité 171 de l'autre desdits deux secteurs d'anneau successifs.

Le pion 174 s'étend selon un axe perpendiculaire au plan de l'extrémité 171 et il en est de même pour la cavité 175 qui débouche sur cette extrémité 171.

De préférence, le pion d'assemblage 174 est cylindrique et la cavité de réception 175 est un alésage également cylindrique.

Le pion 174 peut être fixé sur le secteur d'anneau 170 par un ajustement serré, c'est-à-dire par frettage. Dans ce cas, un évidement (non représenté sur les figures) est ménagé à l'extrémité 171 et le pion 174 est dimensionné pour y être inséré en force et y rester fixé même lors de la cessation de l'utilisation du compresseur.

Le pion 174 peut également être fixé sur le secteur d'anneau 170 par soudure ou par collage, ou par vissage.

Par ailleurs, selon une première variante, et comme représenté sur la figure 5, chaque secteur d'anneau 170 présente à l'une de ses deux extrémités 171, une cavité 175 et est muni à l'autre de ses deux extrémités 171, du pion d'assemblage 174.

Selon une seconde variante, non représentée sur les figures, il est également possible d'avoir au moins un secteur d'anneau (par exemple un demi-anneau) avec un pion d'assemblage 174 à chacune de ses deux extrémités 171 et au moins un autre secteur d'anneau (par exemple un autre demi anneau) avec une cavité 175 à chacune de ses deux extrémités 171.

En outre, et comme cela apparait mieux sur la figure 6, la cavité 175 est configurée et dimensionnée par rapport au pion d'assemblage 174 de façon à recevoir celui-ci avec un jeu de montage J3 qui autorise un montage par ajustement glissant. En d'autres termes, le pion 174 et la cavité 175 sont très finement ajustés afin de pouvoir juste glisser le pion axialement dans la cavité 175.

A titre d'exemple purement indicatif, ce jeu de montage J3 entre les parois latérales du pion 174 et la paroi interne de la cavité 175 est très faible, de l'ordre de quelques centièmes de millimètres. Toujours à titre d'exemple, pour un pion cylindrique d'un diamètre de quelques millimètres, de préférence un diamètre compris entre 3 mm et 8 mm, on peut utiliser un ajustement de type H6g5 selon la norme ISO.

Ce jeu de montage J3 est très faible mais permet toutefois le montage à froid des pièces.

Enfin, le couple de matériaux permettant de réaliser d'une part le pion 174 et d'autre part, le secteur d'anneau 170 présentant la cavité 175, est choisi de sorte que le coefficient de dilatation thermique du matériau constituant le pion 174 soit supérieur au coefficient de dilatation thermique du matériau constituant le secteur d'anneau.

Ainsi, lors du fonctionnement de la turbomachine et donc du compresseur, ce dernier monte en température et le pion 174 se dilate davantage que la cavité 175. Le pion 174 vient alors exercer un effort, dû à son gonflement, sur les parois de la cavité (voir flèches F1 sur la figure 6) et l'assemblage forme ainsi un frettage rendant les deux secteurs d'anneau voisins (successifs) inséparables. L'ouverture problématique des secteurs d'anneau au niveau du plan de joint, décrite précédemment, n'est alors plus possible.

Inversement, à l'arrêt du compresseur, les pièces refroidissent et le pion reprend son diamètre d'origine par dilatation inverse, ce qui a pour effet de supprimer le frettage avec le secteur d'anneau. Les différents secteurs d'anneau peuvent alors être démontés, si besoin est.

Les secteurs d'anneau sont avantageusement réalisés en acier et présentent un coefficient de dilatation thermique moyen de 12.10⁻⁶/°C. Ils peuvent également être réalisés en titane et présentent alors un coefficient de dilatation thermique plus faible, égal à 8,6.10⁻⁶/°C. Dans ce dernier cas, on obtient ainsi un ratio de dilatation plus important avec le pion 174.

L'acier est préféré dans un environnement chaud, le titane dans un environnement froid, comme expliqué ci-après.

De préférence, et afin d'obtenir l'effet technique précité, le ratio entre le coefficient de dilatation thermique du matériau constituant le pion d'assemblage et le coefficient de dilatation thermique du matériau constituant lesdits secteurs d'anneau est supérieur ou égal à 1,3.

Pour les environnements chauds (température supérieure à 150°C), on choisira de préférence un ratio : coefficient de dilatation thermique du matériau constituant le pion d'assemblage/coefficient de dilatation thermique du matériau constituant lesdits secteurs d'anneau supérieur ou égal à 1,3 et inférieur à 2.

On peut citer par exemple comme matériau du pion 174, un acier à base de nickel, du type Inconel qui présente un coefficient de dilatation moyen de 18.10⁻⁶/°C ou de l'aluminium qui présente un coefficient de dilatation moyen de 23.10⁻⁶/°C, le ratio précité étant alors respectivement de 1,5 et de 1,91 avec un secteur d'anneau en acier.

Pour les environnements froids (température inférieure à 150°C), on choisira de préférence un ratio : coefficient de dilatation thermique du matériau constituant le pion d'assemblage/coefficient de dilatation thermique du matériau constituant lesdits secteurs d'anneau supérieur ou égal à 2.

On peut alors citer par exemple comme matériau du pion 174, de l'aluminium qui présente un coefficient de dilatation moyen de 23.10⁻⁶/°C, le ratio précité étant alors de 2,67 avec un secteur d'anneau en titane.

Dans le cas d'un compresseur haute pression, les premiers étages de redresseurs seront dans un environnement froid tandis que les derniers étages seront dans un environnement chaud, la température du compresseur augmentant d'étage en étage de compression.

En combinant le jeu d'assemblage glissant avec les ratios de coefficients de dilatation précités, on obtient ainsi le serrage par dilatation du pion dans la cavité et ce, dès des températures faibles aux environ de 100°C.

L'invention concerne également un redresseur tel que le redresseur 12 précité comprenant les aubes 13 et le carter externe 14, tels que décrits précédemment mais avec l'anneau 17 conforme à l'invention qui remplace l'anneau interne 15, comme cela apparait mieux sur la figure 1 (référence 17 entre parenthèses).

De même, l'invention concerne le compresseur 1 comprenant au moins un étage 10, chaque étage comprenant un rotor 11 et un redresseur 12 comprenant l'anneau interne 17 et enfin une turbomachine comprenant ce compresseur 1 avec l'anneau 17.

## Revendications

1. Anneau interne (17) de support des aubes à calage variable (13) d'un redresseur (12) de compresseur axial (1) d'une turbomachine, comprenant au moins deux secteurs d'anneau (170), assemblés circonférentiellement bout à bout de façon à former ledit anneau interne, chaque secteur d'anneau comprenant une pluralité de logements (172) de réception d'un axe radialement interne de pivotement (132) de l'une desdites aubes (13), tel qu'au niveau de chaque plan de jonction entre les extrémités (171) de deux secteurs d'anneau successifs (170), l'assemblage s'effectue par coopération d'un pion d'assemblage (174) et d'une cavité (175) de réception de ce pion d'assemblage, ledit pion d'assemblage (174) étant fixé sur l'extrémité de l'un desdits deux secteurs d'anneau successifs (170) et ladite cavité (175) étant ménagée à l'extrémité de l'autres desdits deux secteurs d'anneau successifs, la cavité (175) est configurée et dimensionnée pour recevoir ledit pion d'assemblage (174) avec un jeu de montage autorisant un montage par ajustement glissant, et ledit pion d'assemblage (174) est réalisé dans un matériau présentant un coefficient de dilatation thermique supérieur à celui du matériau constituant lesdits secteurs d'anneau successifs (170) de sorte que lors de l'élévation de température résultant de l'utilisation dudit compresseur axial (1), le pion d'assemblage (174) se dilate davantage à l'intérieur de ladite cavité (175) que la cavité (175) elle-même, en assurant ainsi l'assemblage inséparable des deux secteurs d'anneau successifs (170) et que lors de la diminution de température résultant de la cessation de l'utilisation dudit compresseur axial (1), le pion d'assemblage (174) se rétracte à l'intérieur de ladite cavité (175), en autorisant le démontage desdits deux secteurs d'anneau successifs (170).

2. Anneau interne (17) selon la revendication 1, **caractérisé en ce que** chaque secteur d'anneau (170) présente à l'une de ses deux extrémités (171), une cavité de réception (175) d'un pion d'assemblage et **en ce qu'**un pion d'assemblage (174) est fixé à l'autre de ses deux extrémités (171).

3. Anneau interne (17) selon la revendication 1, **caractérisé en ce qu'**au moins l'un des secteurs d'anneau (170) présente à chacune de ses deux extrémités (171), une cavité de réception (175) et **en ce qu'**au moins un autre des secteurs d'anneau (170) présente à chacune de ses deux extrémités (171), un pion d'assemblage (174).

4. Anneau interne (17) selon l'une quelconque des revendications précédentes, **caractérisé en ce qu'**il comprend deux secteurs d'anneau (170) assemblés bout-à-bout pour former ledit anneau interne.

5. Anneau interne (17) selon l'une quelconque des revendications précédentes, **caractérisé en ce que** le ratio entre le coefficient de dilatation thermique du matériau constituant le pion d'assemblage (174) et le coefficient de dilatation thermique du matériau constituant lesdits secteurs d'anneau (170) est supérieur ou égal à 1,3 et inférieur à 2.

6. Anneau interne (17) selon l'une quelconque des revendications 1 à 4, **caractérisé en ce que** le ratio entre le coefficient de dilatation thermique du matériau constituant le pion d'assemblage (174) et le coefficient de dilatation thermique du matériau constituant lesdits secteurs d'anneau (170) est supérieur ou égal à 2.

7. Anneau interne (17) selon l'une quelconque des revendications 1 à 4, **caractérisé en ce que** le matériau constituant le pion d'assemblage (174) est choisi parmi l'aluminium ou un acier à base de nickel et **en ce que** le matériau constituant lesdits secteurs d'anneau (170) est choisi parmi l'acier ou le titane.

8. Anneau interne (17) selon l'une quelconque des revendications précédentes, **caractérisé en ce que** ledit pion d'assemblage (174) est cylindrique et **en ce que** ladite cavité (175) de réception de ce pion d'assemblage est de forme cylindrique.

9. Redresseur (12) de compresseur axial de turbomachine comprenant une pluralité d'aubes à calage variable (13), montées pivotantes entre un carter externe (14) de support desdites aubes (13) et un anneau interne de support des dites aubes, **caractérisé en ce que** ledit anneau interne est un anneau interne (17) selon l'une quelconque des revendications précédentes.

10. Compresseur axial (1) de turbomachine, **caractérisé en ce qu'**il comprend au moins un redresseur (12) selon la revendication 9.

11. Turbomachine, **caractérisée en ce qu'**elle comprend au moins un compresseur axial selon la revendication 10.

## Patentansprüche

1. Innerer Stützring (17) der Schaufeln (13) mit variabler Verstellung eines Gleichrichters (12) eines Axialverdichters (1) einer Turbomaschine, umfassend mindestens zwei Ringsektoren (170), die umfangmäßig endseitig so zusammengefügt sind, dass sie den inneren Ring bilden, wobei jeder Ringsektor eine Vielzahl von Empfangsaufnahmen (172) einer radial inneren Schwenkachse (132) einer der Schaufeln (13) umfasst,
so dass im Bereich jeder Verbindungsebene zwischen den Enden (171) zweier aufeinanderfolgender Ringsektoren (170) der Zusammenbau durch Zusammenwirken eines Montagestifts (174) und eines Empfangshohlraums (175) dieses Montagestifts erfolgt, wobei der Montagestift (174) am Ende einer der beiden aufeinanderfolgenden Ringsektoren (170) befestigt ist und der Hohlraum (175) am Ende des anderen der beiden aufeinanderfolgenden Ringsektoren eingerichtet ist,
wobei der Hohlraum (175) ausgelegt und dimensioniert ist, um den Montagestift (174) mit einem Montagespiel zu empfangen, das eine Montage durch Gleitpassung gestattet, und der Montagestift (174) aus einem Material hergestellt ist, das einen höheren Wärmeausdehnungskoeffizienten aufweist als das Material, das die aufeinanderfolgenden Ringsektoren (170) bildet, so dass bei einem Temperaturanstieg, der sich aus der Verwendung des Axialverdichters (1) ergibt, der Montagestift (174) sich innerhalb des Hohlraums (175) stärker ausdehnt als der Hohlraum (175) selbst, wodurch die untrennbare Verbindung der beiden aufeinanderfolgenden Ringsektoren (170) gewährleistet wird, und bei der Temperaturabnahme, die sich aus der Beendigung der Verwendung des Axialverdichters (1) ergibt, der Montagestift (174) sich innerhalb des Hohlraums (175) zusammenzieht, wodurch die Demontage der beiden aufeinanderfolgenden Ringsektoren (170) ermöglicht wird.

2. Innerer Ring (17) nach Anspruch 1, **dadurch gekennzeichnet, dass** jeder Ringsektor (170) an einem seiner beiden Enden (171) einen Empfangshohlraum (175) eines Montagestifts aufweist und dass ein Montagestift (174) an dem anderen seiner beiden Enden (171) befestigt ist.

3. Innerer Ring (17) nach Anspruch 1, **dadurch gekennzeichnet, dass** mindestens einer der Ringsektoren (170) an jedem seiner beiden Enden (171) einen Empfangshohlraum (175) aufweist und dass mindestens ein anderer der Ringsektoren (170) an jedem seiner beiden Enden (171) einen Montagestift (174) aufweist.

4. Innerer Ring (17) nach einem der vorhergehenden Ansprüche, **dadurch gekennzeichnet, dass** er zwei Ringsektoren (170) umfasst, die endseitig zusammengefügt sind, um den inneren Ring zu bilden.

5. Innerer Ring (17) nach einem der vorhergehenden Ansprüche, **dadurch gekennzeichnet, dass** das Verhältnis zwischen dem Wärmeausdehnungskoeffizienten des Materials, das den Montagestift (174) bildet, und dem Wärmeausdehnungskoeffizienten des Materials, das die Ringsektoren (170) bildet, größer als oder gleich 1,3 und kleiner als 2 ist.

6. Innerer Ring (17) nach einem der Ansprüche 1 bis 4, **dadurch gekennzeichnet, dass** das Verhältnis zwischen dem Wärmeausdehnungskoeffizienten des Materials, das den Montagestift (174) bildet, und dem Wärmeausdehnungskoeffizienten des Materials, das die Ringsektoren (170) bildet, größer als oder gleich 2 ist.

7. Innerer Ring (17) nach einem der Ansprüche 1 bis 4, **dadurch gekennzeichnet, dass** das Material, das den Montagestift (174) bildet, aus Aluminium oder einem Stahl auf Nickelbasis ausgewählt ist und dass das Material, das die Ringsektoren (170) bildet, aus Stahl oder Titan ausgewählt ist.

8. Innerer Ring (17) nach einem der vorhergehenden Ansprüche, **dadurch gekennzeichnet, dass** der Montagestift (174) zylindrisch ist und dass der Empfangshohlraum (175) dieses Montagestifts eine zylindrische Form hat.

9. Gleichrichter (12) eines Axialverdichters einer Turbomaschine mit einer Vielzahl von Schaufeln (13) mit variabler Verstellung, die schwenkbar zwischen einem äußeren Stützgehäuse (14) der Schaufeln (13) und einem inneren Stützring der Schaufeln angebracht sind, **dadurch gekennzeichnet, dass** der innere Ring ein innerer Ring (17) nach einem der vorhergehenden Ansprüche ist.

10. Axialverdichter (1) einer Turbomaschine, **dadurch gekennzeichnet, dass** er mindestens einen Gleichrichter (12) nach Anspruch 9 umfasst.

11. Turbomaschine, **dadurch gekennzeichnet, dass** sie mindestens einen Axialverdichter nach Anspruch 10 umfasst.

## Claims

1. An inner ring (17) for supporting the variable-pitch blades (13) of an axial compressor (1) stator (12) of a turbomachine, comprising at least two ring sectors (170), assembled circumferentially end to end so as to form said inner ring, each ring sector comprising a plurality of housings (172) for receiving a radially inner pivot axis (132) of one of said blades (13),
such that at each junction plane between the ends (171) of two successive ring sectors (170), the assembly is performed by cooperation of an assembly pin (174) and a cavity (175) for receiving this assembly pin, said assembly pin (174) being fixed on the end of one of said two successive ring sectors (170) and said cavity (175) being formed at the end of the other of said two successive ring sectors,
the cavity (175) is configured and dimensioned to receive said assembly pin (174) with a mounting clearance allowing a mounting by sliding fit,
and said assembly pin (174) is made of a material having a coefficient of thermal expansion greater than that of the material constituting said successive ring sectors (170) so that during the temperature rise resulting from the use of said axial compressor (1), the assembly pin (174) expands more inside said cavity (175) than the cavity (175) itself, thus ensuring the inseparable assembly of the two successive ring sectors (170) and so that during the temperature decrease resulting from the cessation of the use of said axial compressor (1), the assembly pin (174) retracts inside said cavity (175 ), by allowing the dismounting of said two successive ring sectors (170).

2. The inner ring (17) according to claim 1, **characterized in that** each ring sector (170) has, at one of its two ends (171), a cavity for receiving (175) an assembly pin and **in that** an assembly pin (174) is fixed to the other of its two ends (171).

3. The inner ring (17) according to claim 1, **characterized in that** at least one of the ring sectors (170) has, at each of its two ends (171), a receiving cavity (175) and **in that** at least one other of the ring sectors (170) has, at each of its two ends (171), an assembly pin (174).

4. The inner ring (17) according to any one of the preceding claims, **characterized in that** it comprises two ring sectors (170) assembled end to end to form said inner ring.

5. The inner ring (17) according to any one of the preceding claims, **characterized in that** the ratio between the coefficient of thermal expansion of the material constituting the assembly pin (174) and the coefficient of thermal expansion of the material constituting said ring sectors (170) is greater than or equal to 1.3 and less than 2.

6. The inner ring (17) according to any one of claims 1 to 4, **characterized in that** the ratio between the coefficient of thermal expansion of the material constituting the assembly pin (174) and the coefficient of thermal expansion of the material constituting said ring sectors (170) is greater than or equal to 2.

7. The inner ring (17) according to any one of claims 1 to 4, **characterized in that** the material constituting the assembly pin (174) is chosen from aluminum or a nickel-based steel and **in that** the material constituting said ring sectors (170) is chosen from steel or titanium.

8. The inner ring (17) according to any one of the preceding claims, **characterized in that** said assembly pin (174) is cylindrical and **in that** said cavity (175) for receiving this assembly pin is cylindrical in shape.

9. A turbomachine axial compressor stator (12) comprising a plurality of variable-pitch blades (13), pivotally mounted between an outer casing (14) for supporting said blades (13) and an inner ring for supporting said blades, **characterized in that** said inner ring is an inner ring (17) according to any one of the preceding claims.

10. An axial compressor (1) of a turbomachine, **characterized in that** it comprises at least one stator (12) according to claim 9.

11. A turbomachine, **characterized in that** it comprises at least one axial compressor according to claim 10.
